# EUROPEAN PATENT APPLICATION

(11) **EP 1 653 531 A1**
(43) Date of publication of application: **03.05.2006**
(21) Application number: 05110062.6
(22) Date of filing: 27.10.2005
(51) Int. Cl.: H01M 2/02

(54) **Secondary battery**

(30) Priority: 28.10.2004 KR 2004086889
(71) Applicant: Samsung SDI Co., Ltd., Suwon-si Gyeonggi-do (KR)
(72) Inventor: Woo, Soon Ki, Kyunggi-do (KR)
(74) Representative: Hengelhaupt, Jürgen

(57) **Abstract**

A secondary battery includes an electrode assembly having first and second electrode plates and a separator interposed between them, a metallic case adapted to contain the electrode assembly, the case being provided with an insulation layer, and a cap assembly adapted to complete the case. The insulation layer helps preventing a short circuit between the electrode plates and the case.

## Description

### CROSS-REFERENCE TO RELATED APPLICATION

This application claims priority to and the benefit of Korean Patent Application No. 2004-0086889, filed October 28, 2004, the entire content of which is hereby incorporated herein by reference.

### BACKGROUND OF THE INVENTION

### Field of the invention

The present invention relates to a secondary battery, and more particularly to a secondary battery having an electrode assembly and a case insulated from each other.

### Description of the Prior Art

Recently, compact and light electronic apparatus including cellular phones, laptop computers, and camcorders have been actively developed and produced. Such portable electronic apparatus is typically equipped with a battery pack so that they can be operated even in a place where no separate power supply is provided. The battery pack has at least one battery positioned therein to output a predetermined level of electric power necessary for driving the portable electronic apparatus for a period of time.

Current battery packs use a secondary battery which is rechargeable. Secondary batteries include, for example, nickel-cadmium (Ni-Cd) batteries, nickel-hydrogen (Ni-MH) batteries, lithium (Li) batteries, and lithium ion batteries.

In particular, lithium secondary batteries have an operating voltage of 3.6V, which is three times larger than nickel-hydrogen batteries or nickel-cadmium batteries widely used as the power supply of portable electronic appliances, as well as a high energy density per unit weight. For these reasons, the lithium secondary batteries are increasingly used in the industry.

Lithium secondary batteries generally use lithium-based oxide as the positive electrode active material and carbon material as the negative electrode active material. According to the type of electrode, lithium secondary batteries are classified into lithium ion batteries using a liquid electrolyte and lithium polymer batteries using a polymer electrolyte. Lithium secondary batteries are manufactured in various types including a cylinder type, a square type, and a pouch type.

In general, a secondary battery indudes an electrode assembly formed by winding first and second electrode plates coated with active materials and a separator positioned between the first and second electrode plates to avoid a short circuit and allowing only lithium ions to move. The secondary battery also usually indudes a case for containing the electrode assembly, and an electrolyte injected into the secondary battery case to enable lithium ions to move.

However, in conventional secondary batteries constructed as above, the electrode plates have a polarity different from the case. Thus, if the electrode plates contact the case, a short circuit can occur.

More specifically, the separator constituting the electrode assembly is larger than the electrode plates to prevent them from contacting each other. When the electrode assembly is contained in the case, the separator is bent and during this process the electrode plates having a polarity different from the case often contact the case.

In the case of a cylinder-type case, a sheath made of an insulation material is wound around the outer surface of the case to prevent it from being damaged and to avoid a short circuit between the case and a conductor.

In general, the sheath is fabricated by inserting a cylinder-type case into a flexible PVC tube and heating it at about 200°C or higher so that the tube thermally contracts. Then, the tube is laminated on the outer surface of the cylinder-type case. As a result, a sheath for protecting the outer surface of the case is provided.

However, the electrode assembly or electrolyte contained in the secondary battery deforms due to the heat used to contract the PVC tube. This degrades the performance of the secondary battery.

In addition, the use of PVC is restricted because it generates harmful substances including phthalate ester, which acts as an environment hormone and as a carcinogenic, and silicon chloride, which when heated causes environmental pollution.

### SUMMARY OF THE INVENTION

Accordingly, a secondary battery is provided having an insulation layer between a case and electrode plates having a polarity different from the case so that direct contact may be avoided between the case and the electrode plates.

The secondary battery includes an electrode assembly having first and second electrode plates and a separator interposed between them; a metallic case adapted to contain the electrode assembly and provided with a surface insulation layer; and a cap assembly adapted to complete the case.

The insulation layer may be formed on the interior surface of the case, on the exterior surface thereof, or on both the interior surface and the exterior surface of the case.

The insulation layer may be provided as a coating and the coating may be formed by dipping, spraying, laminating or painting. The insulation layer may be made of epoxy, nylon, or acryl. The insulation layer may be formed on the lower side to cover the bottom surface of the case. The case may be a square type or a cylinder type.

### BRIEF DESCRIPTION OF THE DRAWINGS

FIG. 1 is an exploded perspective view showing a square-type secondary battery according to the present invention.

FIG. 2 is a partial sectional view of the square-type secondary battery shown in FIG. 1 taken along lines A'-A according to one embodiment of the present invention.

FIG. 3 is a partial sectional view of the square-type secondary battery shown in FIG. 1, taken along lines A'-A according to another embodiment of the present invention.

FIG. 4 is a partial sectional view of the square-type secondary battery according to yet another embodiment of the present invention.

FIG. 5 is a perspective view showing a cylinder-type secondary battery according to still another embodiment of the present invention.

FIG. 6 is a sectional view of the cylinder-type secondary battery shown in FIG. 5, taken along lines B'-B according to a further embodiment of the present invention.

FIG. 7 is a sectional view of the cylinder-type secondary battery shown in FIG. 5, taken along lines B'-B according to yet another embodiment of the present invention.

### DETAILED DESCRIPTION

As shown in the drawings, a secondary battery 100 according to the present invention includes a secondary battery case 110, a jelly-roll type electrode assembly 220 contained in the case 110, and a cap assembly 300 for completing the case 110.

The case 110 is made of a metallic material and has an approximately cylindrical or square shape. The case 110 has an opening formed on an end thereof and may act as a terminal on its own.

The case 110 may be coated with an insulation layer 250. More specifically, the case 110 may have an insulation layer 250a formed on its interior and/or an insulation layer 250b on its exterior. The insulation layer 250 may also be formed on the bottom side where the insulation layers 250a, 250b are connected to each other.

The insulation layer 250 may be formed by dipping the case 110 into an insulation material or spraying an insulation material on the interior of the case 110. In addition, the insulation layer 250 may be formed by painting the case 110 with an insulation material or laminating a film-type insulation material on the case 110.

The insulation material constituting the insulation layer 250 may be epoxy resin, which is a thermosetting resin formed by polymerization of at least two epoxy groups and which has excellent viscosity, adherence, resistance to drugs, electrical properties, and mechanical properties (for example, bending strength and hardness).

Nylon is a chain-type polymer having amide bond -CONH-. Particularly, it is a polyamide-based synthetic polymer. Nylon has good tenacity and excellent resistance to oil and drugs and it may be used at both low and high temperatures in a stable state. Nylon plastic (non-spun nylon) is a typical example of engineering plastic having a small friction coefficient and excellent resistance to wear. Nylon 6 has tenacity, oxygen interruption properties, and resistance to oil as a film and is used to wrap oily foods or frozen foods. Nylon 6, 6 has excellent resistance to heat. Nylon fibers have high tensile strength, low elastic modulus, low absorption ratio, and high resistance to wear. They can be permanently set and are widely used as knitted or woven fabrics. Due to high tensile strength, nylon fibers are especially suitable for very thin woven structures, for instance, stockings for women. They are also used extensively mixed with wool, cotton, or rayon. Recently, aromatic polyamide (aramide) is drawing attention as a new type of polyamide. It indudes benzene rings in the molecular structure and has better high-temperature properties (higher melting point and elastic modulus) than aliphatic polyamide. Therefore, it is used as heat-resistant fibers, tire cords, or other industrial materials. Nylon retains excellent strength, flexibility, and elasticity even when it has the minimum volume. For this reason, nylon may be processed into a thin film.

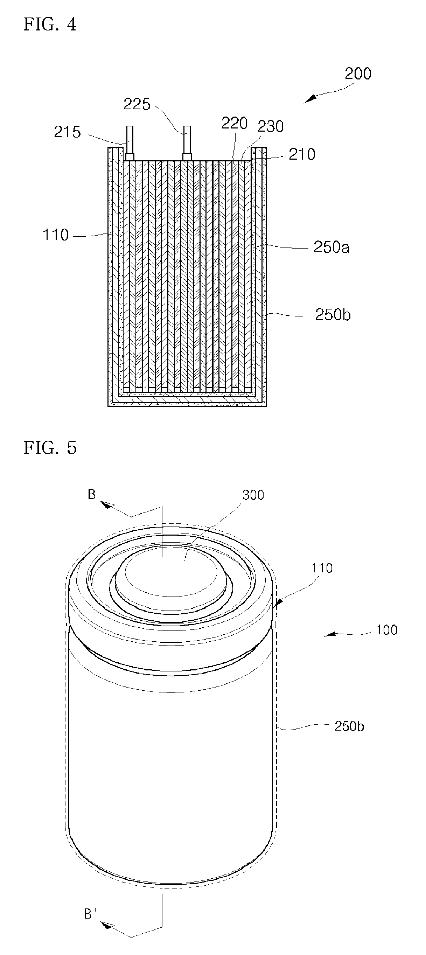

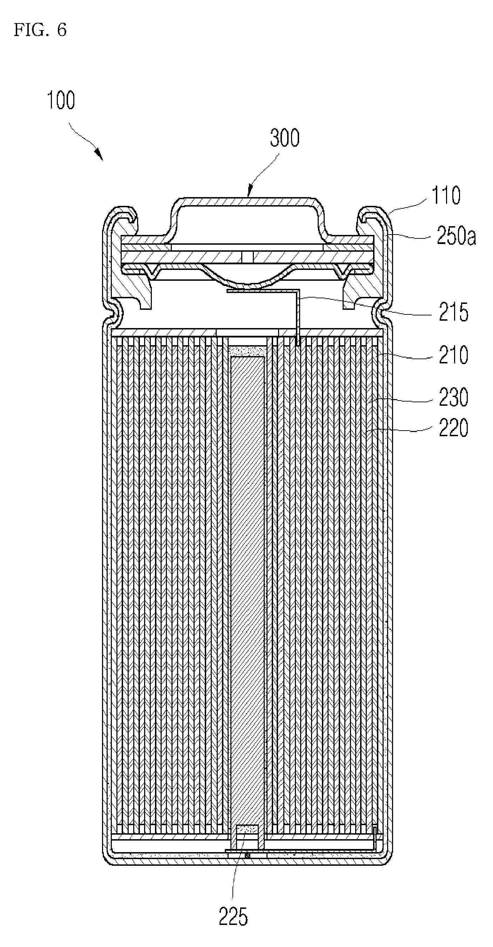

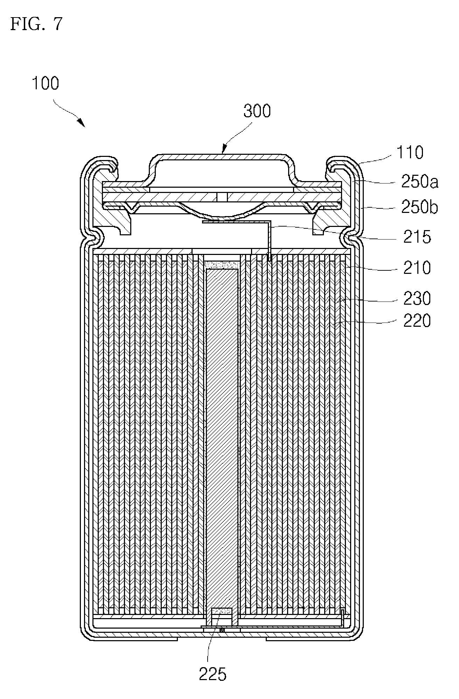

When the case 110 is a cylinder type, as shown in FIGs. 5-7, the insulation layer 250b on the outer surface of the case 110 may be a thin film of nylon. The film-type insulation layer 250b may be laminated on the outer surface of the case 110 by a small amount of heat. The insulation material may be acryl material, but the material is not limited herein.

The electrode assembly 200 is formed by winding first and second electrode plates 210, 220 having first and second electrode tabs 215, 225 attached thereto, respectively, with a separator 230 interposed between the first and second electrode plates 210, 220.

In order to insulate the first and second electrode plates 210, 220 from each other, the separator 230 is larger than the first and second electrode plates 210, 220 so that they do not contact each other.

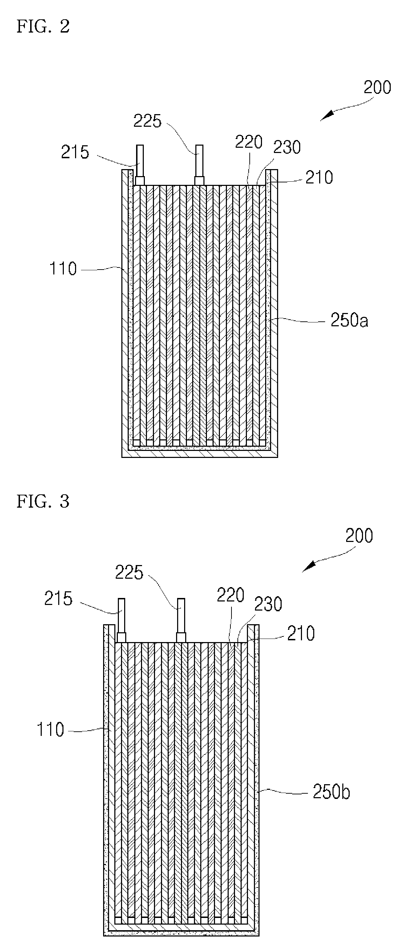

The insulation layer 250 formed on the case 110 may cover either the interior of the case 110 as shown in FIG. 2 or the exterior thereof as shown in FIG. 3. Alternatively, it may cover both the interior and exterior of the case 110 as shown in FIG. 4.

When the electrode assembly 200 is contained in the case 110, the separator 230, larger than the first and second electrode plates 210, 220, does not lean to one side and prevents the bottom of the case 110 from contacting the first or second electrode plate 210, 220. In addition, when a conductor contacts the exterior of the case 110, a short circuit is avoided.

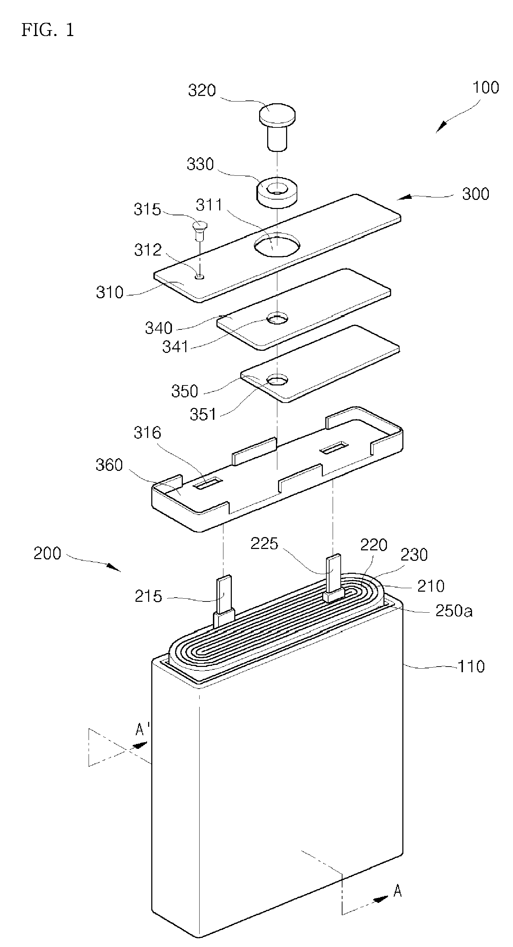

When the case 110 is a square type as shown in FIGs. 1-4, the cap assembly 300 includes a cap plate 310, an insulation plate 340, a terminal plate 350, and an electrode terminal 320. The cap assembly 300 is coupled to the top opening of the case 110 while being coupled to a separate insulation case 360 and seals the case 110.

The cap plate 310 is made of a metal plate and has a size and a shape corresponding to the top opening of the case 110. The cap plate 310 has a centrally located first terminal through-hole 311 into which the electrode terminal 320 is inserted.

When the electrode terminal 320 is inserted into the first terminal through-hole 311, a tubular gasket 330 is coupled to the outer surface of the electrode terminal 320 and inserted together to insulate the electrode terminal 320 from the cap plate 310.

The cap plate 310 has an electrolyte injection hole 312 formed on a side thereof with a predetermined size. After the cap assembly 300 is assembled to the top opening of the case 110, an electrolyte is injected through the electrolyte injection hole 312 and the injection hole is then sealed by a plug 315.

The electrode terminal 320 is connected to the second electrode tab 225 of the second electrode plate 220 or to the first electrode tab 215 of the first electrode plate 210 and acts as a negative or positive electrode terminal. When the case 110 is a square type, the electrode terminal 320 may act as a negative electrode terminal.

The insulation plate 340 is made of an insulation material, such as a gasket, and is coupled to the lower surface of the cap plate 310. The insulation plate 340 has a second terminal through-hole 341 formed in a position corresponding to the first terminal through-hole 311 of the cap plate 310 so that the electrode terminal 320 may be inserted therein.

The terminal plate 350 is made of Ni metal or its alloy and is coupled to the lower surface of the insulation plate 340. The terminal plate 350 has a third terminal through-hole 351 formed in a position corresponding to the first terminal through-hole 311 of the cap plate 310 so that the electrode terminal 320 may be inserted therein. Since the electrode terminal 320 is coupled to the terminal plate 350 via the first terminal through-hole 311 of the cap plate 310 while being insulated by the gasket 330, the terminal plate 350 is electrically connected to the electrode terminal 320 while being electrically insulated from the cap plate 310.

In order to couple the electrode terminal 320 to the cap plate 310, insulation plate 340, and terminal plate 350, the electrode terminal 320 is inserted into the first terminal through-hole 311 of the cap plate 310 with a uniform rotational force.

After passing through the first terminal through-hole 311, the electrode terminal 320 passes through the second and third terminal through-holes 341, 351 formed on the insulation plate 340 and terminal plate 350, respectively, which are coupled to the lower surface of the cap plate 310. The inner diameter of the second terminal through-hole 341 formed on the insulation plate 340 is equal to or slightly larger than the outer diameter of the electrode terminal 320 so that when the electrode terminal 320 is inserted into the second terminal through-hole, the outer surface of the electrode terminal is forced against it.

The electrode assembly 200 has an insulation case 360 positioned on the upper surface thereof to electrically insulate the electrode assembly 200 from the cap assembly 300 and to cover the top of the electrode assembly 200.

The insulation case 360 has an electrolyte injection through-hole 316 formed in a position corresponding to the electrolyte injection hole 312 of the cap plate 310 through which an electrolyte may be injected. The insulation case 360 is made of an insulating polymer resin, for example, polypropylene, but the material is not limited in the present invention.

Since the insulation case 360 is seated on the upper side of the electrode assembly 200 and insulates the case 110 from the first and second electrode plates 210, 220, the upper side of the case 110 may be insulated without any additional insulation layer.

When the case 110 is a cylinder type, the opening 110a of the case 110 is completed by a cap-up constituting the cap assembly 300.

As mentioned above, the secondary battery according to the present invention has insulation layers formed on the interior and exterior of the case to avoid a short circuit caused by contact between the electrode plates and the case.

In the case of a cylinder-type secondary battery, the insulation layer for covering the exterior is made of a material which does not violate environmental regulations.

Although exemplary embodiments of the present invention have been described for illustrative purposes, those skilled in the art will appreciate that various modifications, additions and substitutions are possible, without departing from the scope and spirit of the invention as disclosed in the accompanying claims.

## Claims

1. A secondary battery comprising:
an electrode assembly having a first electrode plate, a second electrode plate and a separator interposed between the first electrode plate and the second electrode plate;
a metallic case adapted to contain the electrode assembly, the metallic case having a surface insulation layer; and
a cap assembly adapted to contain the electrode assembly within the case.

2. The secondary battery as claimed in claim 1, wherein the surface insulation layer is formed on an interior surface of the case.

3. The secondary battery as claimed in daim 1, wherein the surface insulation layer is formed on an exterior surface of the case.

4. The secondary battery as claimed in claim 1, wherein the surface insulation layer is formed on an interior surface and an exterior surface of the case.

5. The secondary battery as claimed in daim 1, wherein the surface insulation layer is provided as a coating.

6. The secondary battery as claimed in claim 5, wherein the coating is formed by dipping.

7. The secondary battery as claimed in claim 5, wherein the coating is formed by spraying.

8. The secondary battery as claimed in claim 5, wherein the coating is formed by laminating.

9. The secondary battery as claimed in claim 5, wherein the coating is formed by painting.

10. The secondary battery as claimed in daim 1, wherein the surface insulation layer is made of epoxy.

11. The secondary battery as claimed in daim 1, wherein the surface insulation layer is made of nylon.

12. The secondary battery as claimed in daim 1, wherein the surface insulation layer is made of acryl.

13. The secondary battery as claimed in claim 1, wherein the surface insulation layer is formed to cover a bottom surface of the case.

14. The secondary battery as claimed in claim 1, wherein the case is a square type.

15. The secondary battery as claimed in claim 1, wherein the case is a cylinder type.

16. In a secondary battery having an electrode assembly including a first electrode plate, a second electrode plate and a separator interposed between the first electrode plate and the second electrode plate, the electrode assembly being housed in a secondary battery case, a method of preventing contact between the secondary battery case and an electrode plate comprising:
providing a metallic case as the secondary battery case, the metallic case having a surface insulation layer and being adapted to hold the electrode assembly;
inserting the electrode assembly into the secondary battery case; and
mounting a cap assembly to the case, the cap assembly being adapted to contain the electrode assembly within the metallic case.

17. The method of claim 16, wherein the surface insulation layer is formed on an interior surface of the metallic case.

18. The method of claim 16, wherein the surface insulation layer is formed on an exterior surface of the metallic case.

19. The method of claim 16, wherein the surface insulation layer is formed on an interior surface and an exterior surface of the metallic case.
